(19) **Europäisches Patentamt European Patent Office Office européen des brevets**

(11) **EP 1 279 309 B1**

(12) **EUROPEAN PATENT SPECIFICATION**

(45) Date of publication and mention
of the grant of the patent:
**03.06.2009 Bulletin 2009/23**

(51) Int Cl.:
*H04W 28/18* (2009.01)     *H04B 1/707* (2006.01)

(21) Application number: **01918086.8**

(22) Date of filing: **28.03.2001**

(86) International application number:
**PCT/SE2001/000674**

(87) International publication number:
**WO 2001/076308 (11.10.2001 Gazette 2001/41)**

(54) **METHOD AND DEVICE AT TELECOMMUNICATION SYSTEM**

VERFAHREN UND VORRICHTUNG IN EINEM TELEKOMMUNIKATIONSSYSTEM

PROCEDE ET DISPOSITIF ASSOCIES A UN SYSTEME DE TELECOMMUNICATION

(84) Designated Contracting States:
**AT BE CH CY DE DK ES FI FR GB GR IE IT LI LU
MC NL PT SE TR**
Designated Extension States:
**LT LV**

(30) Priority: **05.04.2000 SE 0001237**

(43) Date of publication of application:
**29.01.2003 Bulletin 2003/05**

(73) Proprietor: **TELIASONERA AB
106 63 Stockholm (SE)**

(72) Inventors:
• **ANDERSIN, Mikael
S-118 64 Stockholm (SE)**
• **HENRIKSSON, Anders
S-413 10 Göteborg (SE)**

(74) Representative: **Hopfgarten, Nils et al
L.A. Groth & Co. KB
P.O. Box 6107
102 32 Stockholm (SE)**

(56) References cited:
**WO-A1-99/52307           DE-A1- 19 835 643
GB-A- 2 310 972           US-A- 5 752 194
US-A- 5 914 950**

**Description**

Technical field

The present invention relates to a method and a digital telecommunication system, where coded transmission is applied. The invention is specifically aimed at allocation of resources in the CDMA-system to users to achieve an optimal utilization of available frequency range on the air.

Prior art

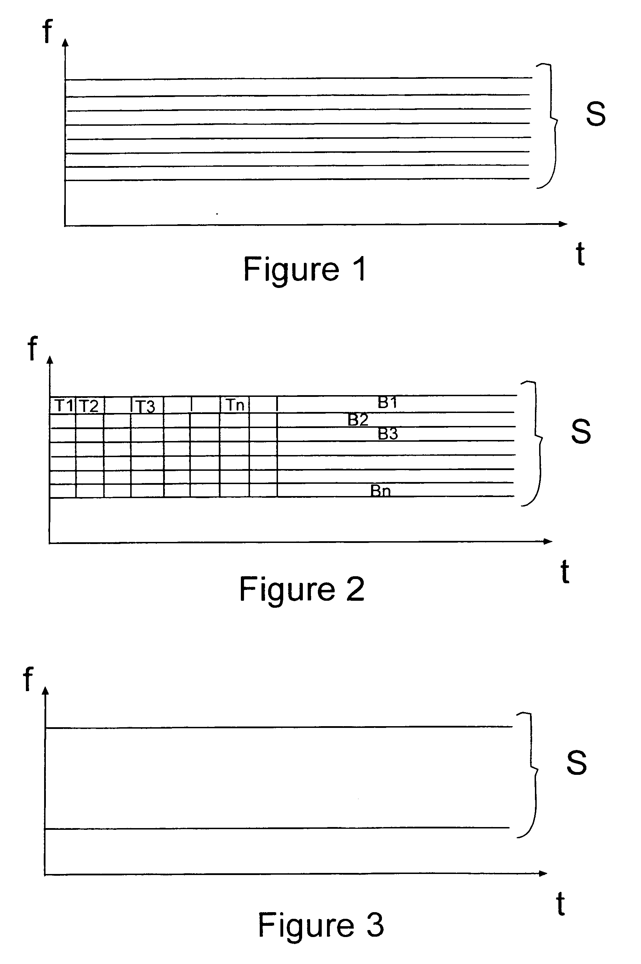

Within mobile communication the technology has developed since the first systems appeared. In the first systems, according to Figure 1, a range S, was allocated within a given frequency spectrum. In order to satisfy the communication needs, the range, S, was divided into a number of channels, k, which were allocated to the users. In these first systems, the channels, k, were of the same size, and the transmission capacity were the same for all users irrespective of need. Systems with this construction only allow one transmision (communication) at the same time, corresponding to the number of channels that are available within an area.
Concurrently with the growth of the mobile communication, the need for a larger number of transmissions has increased. This has been met with the introduction of digitized communication, which is shown in Figure 2. In this case the range, S, is still divided into a number of channels, but the information is transmitted in time slots, T1, T2 etc. This technology is called TDMA, which considerably increases the transmission capacity in the mobile radio networks. The technology consequently makes possible that more transmissions share one and the same frequency.
In common for each above mentioned technology is that they have been created for transmission of in the first place speech and at that have been given fixed frames for the use of them.
A development of the TDMA-system is the CDMA-system where the range, S, is not divided into a number of channels but the whole available range is utilized, at which defined codes are utilized to discern between the pieces of information that shall be identified. The technology for identification of and sorting of information is in itself since before known to the expert in the field.

Technical problem

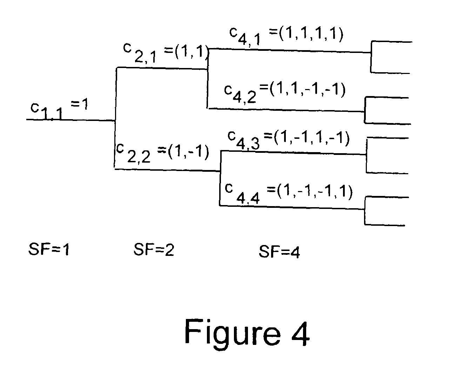

In the social state of today the need to transmit and receive large amounts of information is increasing. For this reason there is a desire to utilize the available frequency range efficiently with regard to the resources of the system and the needs of the users at each moment. The implication of this is that the system in different situations has to take into consideration various needs of established and wanted communications. In CDMA (Code Division Multiple Access)-systems this possibility is given, but efficient methods for allocation of and sorting of information are lacking.
Resource allocation in a telecommunication network is described in US 5 914 950 which network comprises means for data transmission. The available resources in the network are allocated to the users according to an assigned priority. Each user is assigned a maximum capacity depending on the assigned priority. In order to allow each cell in the network to meet this demand, the lowest of a number of selectable maximum capacities is chosen for each user. The resource allocation is dynamically updated to accomplish an optimal allocation.
The present invention aims at presenting a solution to above mentioned problem. UMTS (Universal Mobile Telecommunication System) is the European term for the third generation of mobile systems which is planned to be in operation at the beginning of twenty-first century. The system has three defined modes which all have that in common that they are using CDMA in some form.
In order to discern between different users in CDMA-based systems, i.e. obtain orthogonality between them, different forms of codes are used, hence the name "Code Division Multiple Access". In UMTS WCDMA two kinds of codes are used, spreading codes and scrambling codes. The spreading code spreads information that shall be transmitted at a chip rate of 3,84 Mchip/s. The length of the spreading code varies from 1-512 bit depending on present data speed. The scrambling codes on the other hand do not change the number of bits that shall be transmitted but only change the value of them according to a well defined schedule.
In downlink it is the spreading code that guarantees the orthogonality between different users in the same cell. In order to maintain the orthogonality irrespective of which data speed that is used at the transmission, so called Orthogonal Variable Spreading Factor, OVSF-codes, are used. The OVSF-codes are easiest illustrated by a code tree, see Figure 4.
Each level in the code tree defines a channel code with length SF. All codes in the tree cannot be used at the same time within a cell. A code can be used in a cell if, and only if, no other code along the path from the specific code to the root of the code tree or in the sub-tree under the specific code is used in the cell.
It is easy to realize that a totally arbitrary allocation of codes results in a very inefficient use of the available codes. For this reason it is of great interest to in some way make the use of codes more efficient. The present invention provides an optimal allocation of codes based on criteria defined by the operator.

The solution

The present invention thus relates to a method at telecommunication systems utilizing CDMA (Code Division Multiplex Access)-technology at exchange of information between users according to claim 1. Resources are then allocated to users, corresponding to at least a lowest requested capacity. A weighting, related to an order of priority between the users, is further allocated each moment to the users. Based on available information, the capacity is allocated to the users according to a maximal allocation with regard to that the total capacity of the system is not exceeded.

The optimization problem that shall be solved is that maximum for the sum of all to the users allocated resources, with regard to the mentioned weighting, appoints an allocation of resources between the users. Further, allocated resources at each level shall correspond to one to user necessary lowest resource, and that the sum of all to the users allocated resources is covered by the total capacity of the system, and that each user is allocated one code at most. The mentioned weighting is further expressed by integers, which results in that the optimization problem is possible to solve by Branch and Bound methods. The solution makes possible that in the system available resources are allocated and reallocated between the users depending on the solution of the optimization problem. The purpose of the allocation of the resources is to create free resources, which constitute reserves for future needs.

The invention further relates to a telecommunication systems utilizing CDMA, Code Division Multiple Access, technology for exchange of information between users according to claim 5. Further, resources shall be allocated to the users. For that purpose the system is arranged to allocate to the users resources corresponding to at least a lowest indicated capacity. The system further allocates to the users a weighting according to the users' at each time allocated order of priority. The system includes a calculation and allocation unit which at each time calculates an optimal allocation of available resources, according to which resources are allocated or reallocated between the users within the total capacity of the system. The calculation and reallocation unit is arranged to calculate maximum for the sum of all to the users allocated resources in relation to indicated weightings. The solution of the optimization problem then indicates how the resources shall be allocated between the users. The system further provides information to the calculation and allocation unit for finding out largest and smallest resources that respective user needs at each moment. The optimization problem is solved on condition that the users are allocated at least the lowest resource that is needed and that the resources of the system are not exceeded. The optimization problem is further solved while considering that the users are allocated at most one code.

Advantages

The invention makes possible that resources, codes in the CDMA-case, in a frequency spectrum is given an optimal allocation depending on the users' need at each time. This means on the one hand that the users are only allocated the channel range that is needed each time, on the other that the resources that exist are allocated in best possible way in order to create range for future needs.

Further, the invention presents a definition of the existing optimization problem, at which the problem can be set in a form which can be solved by Branch and Bound methods. The consequence of this is that mathematical methods suitable to be solved by means of computer programs can be introduced and connected with the allocation of channels to the users. Further advantages are that a priority between the users is introduced and this is allowed to vary depending on if the users have been allocated resources or not, and depending on the time of the day, the number of users each time etc.

Description of figures

Figure 1 shows channel allocation in an analog radio system.
Figure 2 shows channel allocation in a packet oriented radio system.
Figure 3 shows the utilization of spectrum in a system according to the invention.
Figure 4 shows the tree structure of channels according to the invention.

Preferred embodiment

In the following, the invention is described on basis of the figures and the terms in them.

The present invention relates to a method and a CDMA based telecommunication system as defined in respective claims 1 and 5, for allocation of capacity or resource range to users from the given capacity range of the system.

For that purpose an optimization problem is utilized which can be solved by Branch and Bound methods. Maximum is searched for the sum of all to the users allocated capacity or resources with an allocated weighting indicating the order of precedence between the users. The indicated problem is solved provided that all users are allocated at most one resource; that each user is allocated at least the resource that is necessary, and that the allocated resource does not exceed a defined highest resource. Further, the sum of all allocated resources must not exceed the total resources of the system. Calculations and allocation of the resource allocation is performed in one in the system integrated calculation and allocation unit.

Allocation of capacity or resources to users shall be performed according to a pattern which gives optimal utilization of available resources. Allocation is made in a code tree, which is shown in Figure 4, where consideration shall be taken to which resources that already have been allocated to users. In order to find out if a resource has been allocated to a user, a variable x with index i is defined for the user, and j for the resource. Said variable x is consequently given the value 1, if the resource is allocated to the user, or 0 when no resource is given to said user.

The number of resources at level j for users i is described by a variable y with index i indicating the user, and j indicating the level in question. The number of resources y at level j is defined as 2 raised to j. The value j is set to 512/SF, where SF is the spreading factor. That 512 is used in this connection is due to existing practice. Utilizing other numbers are as such no obstacle to the invention which allows any number within specified definitions. Further are defined a highest and a lowest value which the variable is allowed to take. The lowest value at this indicates the lowest capacity or resource that can be allocated to a user, x, to make it possible to him/her to execute the wanted communication. The maximal resource defines the largest resource that a user needs. The sum of all allocated capacity or resources which are utilized by the users shall amount to, or be below, the available capacity. Said total capacity or resource consequently shall be allocated between users the capacity needs of whom on the one hand are different, and on the other can vary in time. Further, the users are given a weighting, $\alpha$, which indicates how important it is that said user is allocated a capacity or resource in relation to other users. The weighting is allowed to vary depending on whether the user is already allocated a resource or not. Further, the weighting indicates whether a user has a higher priority than another user. By these definitions consequently a possibility is given to decide orders of priority between users who have been allocated resources and those who shall be allocated resources, in the existing system. The indicated weighting as such is allowed to take any value, but in order to create an optimization problem for x, it is of advantage to utilize integers. This results in an optimization problem where maximum is searched for, for the sum of all allocated resources with belonging weighting, provided that available resources are not exceeded, and that the user is given the lowest resource that is required, and that the sum of all to users allocated resources do not exceed the maximal capacity of the system, and that each user is only allocated one code which defines a resource being within an interval defined by the user's highest and lowest need. In the problem consequently is included to decide whether the users shall be allocated resources or not, and in the cases allocations are made, the size of the resource. With a set up as has been described above, a formulation has been created which is classic within the optimization theory, and which for instance is solved by means of Branch & Bound-methods, which can be found in manuals for optimization theory.

The following problems shall be solved

$$\max \sum_i \sum_j a_{i,j} x_{i,j} y_{i,j} ; given : m_i \le M_i \forall i$$

$$m_i \le y_{i,j} \le M_i$$

$\alpha$ is a weight which is set by the operator for each user.

$$given, \sum_i \sum_j x_{i,j} y_{i,j} \le N$$

where N is the capacity in the base station, and

$$\sum_{j} x_{i,j} \leq 1$$

further applies that

$$x_{i,j}$$

= binary variable which indicates if user i is allocated on resource j

$$x_{i,j} \in \{0,1\}, \sum_{i} x_{i,j} \leq 1$$

$$y_{i,j} = 2^{j}$$

the number of resources for user i at level j, where j=512/SF where SF is the spreading factor

$$m_i \leq y_{i,j} \leq M_i$$

where m(i) represents the lowest value of y(i,j) and M(i) the maximal value of y(i,j)

Orthogonality for the channels is further a demand in the solving of problem above.

In the formulation of the problem above, the weights, $\alpha_{i,j}$ have been selected as integers, which results in that the code allocation problem is set to a form which is known and where efficient methods for solving exist. The final value of the goal function, in optimum, is in this connection of secondary importance because only the vector x that reaches optimum is of interest. The absolute values of $\alpha_{i,j}$ consequently are not of interest, but only the relation between them. Because the weights can be set to arbitrary values, and especially integer values, a relative weighting between the terms can be achieved. By dividing the goal function by an integer is realized that a weighting can be achieved between the different components which is arbitrary close to a weighting where real values of the weights are allowed.

Because the problem is not static, but is changed by time, is required that the system continuously solves the above described optimization system. For this purpose the system is given an unit which has the task to calculate the optimization problem and to, based on its solution, allocate the resources between the users. The information required to find out the different needs of the users at each point of time are retrieved from respective user and from the operator/operators who are responsible for the users and the capacities that are needed.

At each moment consequently there is a collecting of information from users and operators regarding the wishes of the users, the criteria of the operators for the users in the calculating and resource allocating device. After that, the solution of the optimization problem is calculated, which solution not necessarily has to be solved exactly, but only has to be solved regarding the order of magnitude. At the solution of the optimization problem, however, is needed that the vector x shall be obtained as integer with elements the values of which are 0 or 1. The calculation unit after that decides how the resources are allocated between the users and if the resource allocation shall be changed for one or more of the users with the intention to optimize the utilization of in the system available maximal resources and, as far as possible, create reserve range for future needs from the users.

**Claims**

1. Method at a CDMA based telecommunication system for allocating codes to users, wherein a user is allocated a weighting indicating the user's priority in relation to other users, **characterized in that** the user is allocated a code corresponding to at least a lowest capacity that the user requests, and that the code is achieved from an optimisation problem where maximum is searched for, for the sum of all allocated capacity with belonging weighting, provided that the maximal capacity of the system is not exceeded by said sum.

2. Method as claimed in claim 1, **characterised in that** the optimisation problem is solved provided that the allocated code, at each level, for each user, at least corresponds to one for the user lowest capacity, that the allocated capacity does not exceed the total capacity of the system, and that each user is allocated at most one code.

3. Method as claimed in any of the previous claims, **characterised in that** the weighting is indicated by integers, and **in that** the optimisation problem is solved by means of Branch and Bound methods.

4. Method as claimed in any of the previous claims, **characterised in that** capacity is allocated and reallocated between the users depending on the solution of the optimisation problem, wherein information required to find out different needs of the users at each time is retrieved from respective users and from operaters responsible for the users and the capacities model.

5. CDMA based telecommunication system adapted to allocate codes to users, which system is arranged to allocate a weighting to a user indicating the user's priority in relation to other users, **characterized in that** the system is arranged to allocate a code to the user corresponding to at least a lowest capacity that the user requests, and that a calculation and allocation unit is arranged to achieve said code by solving, an optimisation problem where the maximum for the sum of all allocated capacity with belonging weighting is searched, provided that the maximal capacity of the system is not exceeded by said sum.

6. System as claimed in claim 5, **characterised in that**, on basis of information given by the system, the calculation and allocation unit is arranged to find out the smallest and largest capacity each user needs, and that the calculation and allocation unit is arranged to be solve the optimisation problem on condition that the users are allocated at least the lowest necessary capacity and the total capacity of the system is not exceeded.

7. System as claimed in claims 5 or 6, **characterised in that** each user is allocated at most one code.

8. System as claimed in claim 7, **characterised in that** the code defines the capacity that is allocated to the user.


**Patentansprüche**

1. Verfahren bei einem auf CDMA beruhenden Telekommunikationssystem zum Zuordnen von Codes zu Benutzern, bei dem einem Benutzer eine Gewichtung zugeordnet wird, die die Priorität des Benutzers in Bezug auf andere Benutzer anzeigt, **dadurch gekennzeichnet, dass** dem Benutzer ein Code zugeordnet wird, der wenigstens einer geringsten Kapazität entspricht, die der Benutzer anfordert, und dass der Code von einem Optimierungsproblem erhalten wird, wo nach dem Maximum für die Summe aller zugeordneten Kapazität mit dazugehöriger Gewichtung gesucht wird, vorausgesetzt, dass durch diese Summe nicht die maximale Kapazität des Systems überschritten wird.

2. Verfahren nach Anspruch 1, **dadurch gekennzeichnet, dass** das Optimierungsproblem gelöst wird, vorausgesetzt, dass der zugeordnete Code auf jedem Pegel für jeden Benutzer wenigstens einer der für den Benutzer niedrigsten Kapazität entspricht, dass die zugeordnete Kapazität nicht die gesamte Kapazität des Systems überschreitet, und dass jedem Benutzer höchstens ein Code zugeordnet wird.

3. Verfahren nach einem der vorangehenden Ansprüche, **dadurch gekennzeichnet, dass** die Gewichtung durch ganze Zahlen angezeigt wird und dass das Optimierungsproblem mithilfe von Branch and Bound (Verzweigung und Schranke)-Verfahren gelöst wird.

4. Verfahren nach einem der vorangehenden Ansprüche, **dadurch gekennzeichnet, dass** Kapazität unter den Benutzern in Abhängigkeit von der Lösung des Optimierungsproblems zugeordnet und erneut zugeordnet wird, wobei die Information, die zum Herausfinden unterschiedlicher Bedürfnisse der Benutzer zu jeder Zeit erforderlich ist, von entsprechenden Benutzern und von Betreibern eingeholt wird, die für die Benutzer und die benötigte Kapazitäten verantwortlich sind.

5. Auf CDMA beruhendes Telekommunikationssystem, das dazu ausgebildet ist, Codes Benutzern zuzuordnen, welches System dazu ausgebildet ist, eine Gewichtung einem Benutzer zuzuordnen, die die Priorität des Benutzers in Bezug auf andere Benutze anzeigt, **dadurch gekennzeichnet, dass** das System dazu ausgebildet ist, einem Benutzer einen Code zuzuordnen, der wenigstens einer niedrigsten Kapazität entspricht, die der Benutzer anfordert, und dass eine Berechnungs- und Zuordnungseinheit dazu ausgebildet ist, diesen Code durch Lösen eines optimierungsproblems zu erhalten, wo das Maximum für die Summe aller zugeordneten Kapazität mit dazugehöriger Gewichtung gesucht wird, vorausgesetzt, dass die maximale Kapazität durch die Summe nicht überschritten wird.

6. System nach Anspruch 5, **dadurch gekennzeichnet, dass** aufgrund der Information, die durch das System gegeben wird, die Berechnungs- und Zuordnungseinheit dazu ausgebildet ist, die kleinste und die größte Kapazität herauszufinden, die jeder Benutzer benötigt, und dass die Berechnungs- und Zuordnungseinheit dazu ausgebildet ist, das Optimierungsproblem unter der Bedingung zu lösen, dass den Benutzern wenigstens die niedrigste notwendige Kapazität zugeordnet wird und die gesamte Kapazität des Systems nicht überschritten wird.

7. System nach Anspruch 5 oder 6, **dadurch gekenntzeichnet, dass** jedem Benutzer höchstens ein Code zugeordnet wird.

8. System nach Anspruch 7, **dadurch gekennzeichnet, dass** der Code die Kapazität definiert, die dem Benutzer zugeordnet wird.

## Revendications

1. Procédé, dans un système de télécommunication basé sur CDMA, destiné à affecter des codes aux utilisateurs, dans lequel un utilisateur est affecté d'un coefficient indiquant la priorité de l'utilisateur par rapport à d'autres utilisateurs, **caractérisé en ce que** l'utilisateur est affecté d'un code correspondant à an moins la capacité la plus basse que requiert d'utilisateur, et **en ce que** le code est obtenu à partir d'un problème d'optimisation dans lequel est recherché le maximum pour la somme de la capacité totale affectée avec un coefficient propre, à condition que la capacité maximale du système ne soit pas dépassée par ladite somme.

2. Procédé selon la revendication 1, **caractérisé en ce que** le problème d'optimisation est résolu à condition que le code affecté, à chaque niveau, pour chaque utilisateur, corresponde au moins à un pour la capacité d'utilisateur la plus basse, **en ce que** la capacité affectée n'excède pas la capacité totale du système, et **en ce que** chaque utilisateur est affecté au plus d'un seul code.

3. Procédé selon l'une quelconque des revendications précédentes, **caractérisé en ce que** le coefficient est indiqué par des entiers, et **en ce que** le problème d'optimisation est résolu au moyen de méthodes par branchement et limites.

4. Procédé selon l'une quelconque des revendications précédentes, **caractérisé en ce qu'**une capacité est affectée et réaffectée entre les utilisateurs en fonction de la solution du problème d'optimisation dans lequel les informations requises afin de trouver les différents besoins des utilisateurs sont récupérées chaque fois à partir des utilisateurs respectifs et des opérateurs responsables des utilisateurs et des capacités requises.

5. Système de télécommunication basé sur CDMA adapté afin d'affecter des codes aux utilisateurs, lequel système est agencé de manière à affecter un coefficient à un utilisateur indiquant la priorité de l'utilisateur par rapport à d'autres utilisateurs **caractérisé en ce que** le système est agencé de manière à affecter un code à l'utilisateur correspondant au moins à la capacité la plus basse que demande l'utilisateur, et de sorte qu'une unité de calcul et d'affectation est agencée afin d'obtenir ledit code en résolvant un problème d'optimisation dans lequel le maximum de la somme de la capacité totale affectée avec un coefficient propre est recherché à condition que la capacité maximale du système ne soit pas dépassée par ladite somme.

6. Système selon la revendication 5, **caractérisé en ce que**, sur la base d'informations données par le système, l'unité de calcul et d'affectation est agencée afin de trouver la capacité la plus faible et la plus grande que nécessite chaque utilisateur, et l'unité de calcul et d'affectation est agencée de manière à résoudre le problème d'optimisation à la condition que les utilisateurs soient affectés d'au moins la capacité la plus faible nécessaire et que la capacité totale du système ne soit pas dépassée.

7. Système selon la revendication 5 ou 6, **caractérisé en ce que** chaque utilisateur est au plus affecté d'un seul code.

8. Système selon la revendication 7, **caractérisé en ce que** le code définit la capacité qui est affectée à l'utilisateur.

f

S

Figure 1

f

| T1 | T2 | | T3 | | | Tn | | | B1 |
|----|----|--|----|--|--|----|--|--|----|
| | | | | | | | | | B2 |
| | | | | | | | | | B3 |
| | | | | | | | | | |
| | | | | | | | | | |
| | | | | | | | | | Bn |

S

Figure 2

f

S

Figure 3

$c_{4,1} = (1,1,1,1)$

$c_{2,1} = (1,1)$

$c_{4,2} = (1,1,-1,-1)$

$c_{1,1} = 1$

$c_{4,3} = (1,-1,1,-1)$

$c_{2,2} = (1,-1)$

$c_{4,4} = (1,-1,-1,1)$

SF=1                SF=2                    SF=4

# Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5914950 A